# EUROPEAN PATENT APPLICATION

(11) **EP 4 518 438 A1**
(43) Date of publication of application: **05.03.2025**
(21) Application number: 22940153.4
(22) Date of filing: 27.04.2022
(51) Int. Cl.: H04W 48/10, H04W 24/10, H04W 74/08

(54) **WIRELESS COMMUNICATION DEVICE AND WIRELESS COMMUNICATION METHOD**

(71) Applicant: NTT DOCOMO, INC., Tokyo 100-6150 (JP)
(72) Inventor: HARADA, Hiroki, Tokyo 100-6150 (JP); OKANO, Mayuko, Tokyo 100-6150 (JP); KUMAGAI, Shinya, Tokyo 100-6150 (JP)
(74) Representative: Hoffmann Eitle
(86) International application number: PCT/JP2022/019110
(87) International publication number: WO 2023/209875

(57) **Abstract**

A radio communication apparatus according to an aspect of the present disclosure includes: a receiving section that receives specific configuration information associated with a Public Land Mobile Network (PLMN) ID; and a control section that controls, based on the configuration information, at least one of measurement associated with the PLMN ID, random access associated with the PLMN ID, and determination of a resource associated with the PLMN ID. An aspect of the present disclosure allows flexible communication operations to be performed between operators.

## Description

### Technical Field

The present disclosure relates to a radio communication apparatus and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement, and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel. 18 or later versions), for the purpose of higher efficiency in utilization of frequency bands (existing frequency band and new high frequency band), resource sharing is under study.

Meanwhile, there is a case where a configuration for a specific UE is not able to be changed between a plurality of operators. In such a case, the communication operation may not be able to be performed flexibly for each operator, causing enhancement in the communication quality to be suppressed.

In view of this, an object of the present disclosure is to provide a radio communication apparatus and a radio communication method that enable flexible communication operations to be performed between operators.

### Solution to Problem

A radio communication apparatus according to an aspect of the present disclosure includes: a receiving section that receives specific configuration information associated with a Public Land Mobile Network (PLMN) ID; and a control section that controls, based on the configuration information, at least one of measurement associated with the PLMN ID, random access associated with the PLMN ID, and determination of a resource associated with the PLMN ID.

### Advantageous Effects of Invention

An aspect of the present disclosure allows flexible communication operations to be performed between operators.

### Brief Description of Drawings

[FIG. 1] FIG. 1 is a diagram to show an example of a configuration of an IAB.
[FIG. 2] FIGS. 2A to 2D are each a diagram to show an example of network sharing.
[FIG. 3] FIG. 3 is a diagram to show an example of a configuration of STC according to a first embodiment.
[FIG. 4] FIG. 4 is a diagram to show an example of a configuration of SMTC according to the first embodiment.
[FIG. 5] FIG. 5 is a diagram to show an example of a configuration of Availability Combinations according to Embodiment 3-1.
[FIG. 6] FIG. 6 is a diagram to show an example of a schematic structure of a radio communication system according to one embodiment.
[FIG. 7] FIG. 7 is a diagram to show an example of a structure of a base station according to one embodiment.
[FIG. 8] FIG. 8 is a diagram to show an example of a structure of a user terminal according to one embodiment.
[FIG. 9] FIG. 9 is a diagram to show an example of a hardware structure of the base station and the user terminal according to one embodiment.
[FIG. 10] FIG. 10 is a diagram to show an example of a vehicle according to one embodiment.

### Description of Embodiments

### (IAB Node)

It is studied to use an IAB (Integrated Access Backhaul) technique that uses NR communication as a backhaul between base stations (or between a base station and a relay station). In particular, it is expected that an IAB using NR communication with a millimeter wave used allows a coverage area to be widened in low cost.

An IAB node may have a function of at least one of a DU (Distribution Unit), a CU (Central Unit), an MT (Mobile Termination), and the like. Thus, an IAB node with a DU/CU function may function as a base station and an IAB node (IAB node MT) with an MT function may function as a user terminal (user equipment (UE), terminal).

Note that an IAB may be referred to as a wireless backhaul. A link between nodes using an IAB may be referred to as a backhaul (BH) link. A link between an IAB node and a UE may be referred to as an access link. An IAB node may use, for a backhaul link, communication using NR. An IAB node may use, for an access link, communication using NR or may use communication based on another RAT (Radio Access Technology).

With introduction of such an IAB, base stations are possible to use the same frequency simultaneously or by switching, between a use for backhaul and a use for UE access, and thus enhancement of efficiency in frequency utilization may be expected, for example. For example, a backhaul link and an access link may be multiplexed using at least one of time division multiplexing (TDM), frequency division multiplexing (FDM), and space division multiplexing (SDM).

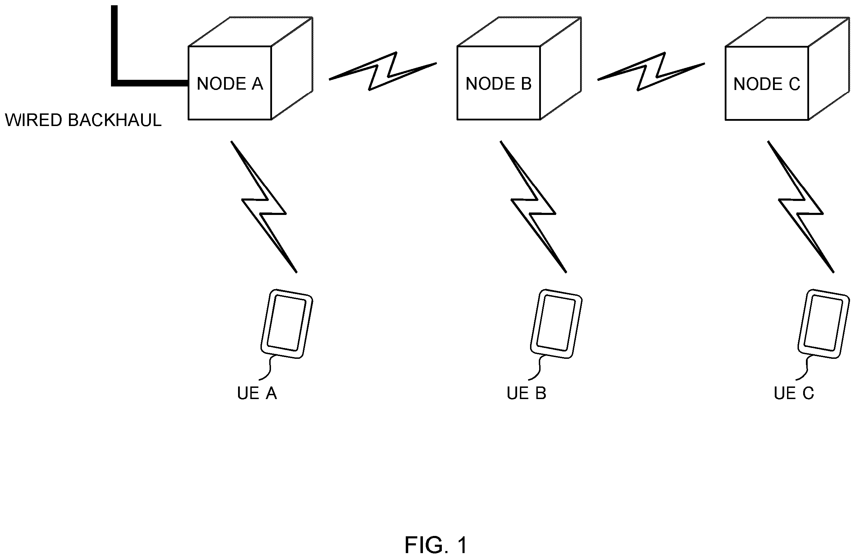

FIG. 1 is a diagram to show an example of a configuration of an IAB. In the present example, three nodes (network nodes) A to C are shown. Node A is connected to a core network via a wired backhaul (for example, optical fiber network). Such a node connected to a core network via a wired backhaul may be referred to as an IAB donor.

An IAB node or IAB donor that is upper may be referred to as a parent IAB node (parent node IAB), a parent node, an upper node, an upper IAB node, or the like. An IAB node that is lower may be referred to as a child IAB node (child node IAB), a child node, a lower node, or the like. Here, "upper" may mean being nearer at least one of a base station (for example, gNB), a wired backhaul, a core network, and the like (may mean having a fewer number of hops). Hereinafter, a network node including an IAB node and IAB donor may be simply referred to as a node.

For example, in the example of FIG. 1, node A is a parent node of node B and node B is a parent node of node C. As described above, an IAB may include a plurality of backhaul hops. Nodes A to C are possible to communicate with UEs A to C, respectively, via access links.

In a case where a certain node has a function of upper node, the node is possible to accommodate a lower IAB node (connect to the lower IAB node via a BH link) and is possible to accommodate a UE (connect to the UE via an access link). The upper node may perform scheduling of the lower IAB node or may control transmission or reception in the lower IAB node.

In a case where a certain IAB node does not have any function of upper node (for example, a case where the certain IAB node supports an operation as a base station), the IAB node is not possible to accommodate any lower IAB node and is possible to accommodate only a UE.

### (Resource Sharing)

For future radio communication systems (for example, Rel. 18 or later versions), for the purpose of higher efficiency in utilization of frequency bands (existing frequency band and new high frequency band), resource sharing is under study.

Resource sharing allows a plurality of operators to share a radio access network (RAN), network (NW, for example, base station) investment cost to be split between the respective operators, and a large number of base stations to be installed.

For example, a plurality of operators share an antenna site (a piece of land/steel tower or the like), so that the plurality of operators can split the station placing cost.

A plurality of operators share a distributed node (for example, Distributed Unit (DU))/central node (for example, Central Unit (CU)) (for example, share a hardware infrastructure), so that the plurality of operators can split the apparatus cost.

A plurality of operators share a frequency/antenna unit (for example, Radio Unit (RU)), so that efficiency in resource utilization can be enhanced, such as that a resource not used by an operator is made available for another operator, for example.

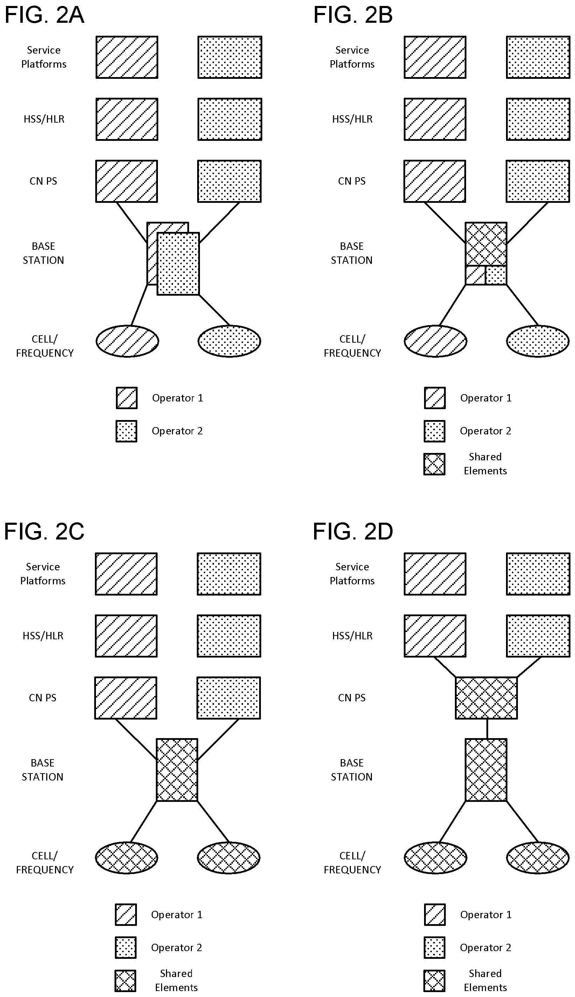

FIGS. 2A to 2D are each a diagram to show an example of network sharing.

FIG. 2A shows an example of site sharing. As shown in FIG. 2A, in site sharing, a plurality of operators share an antenna site. Meanwhile, a service platform, an HSS (Home Subscriber Server) /HLR (Home Location Register), core network (CN) packet switching (PS), a base station, and a cell/frequency are independent for each of the plurality of operators.

FIG. 2B shows an example of an MORAN (Multi Operator R_AN). As shown in FIG. 2B, in the MORAN, a plurality of operators share a part of a base station (for example, hardware of the base station), in addition to an antenna site. Meanwhile, a service platform, an HSS/HLR, CN PS, another part of the base station (for example, software of the base station), and a cell/frequency are independent for each of the plurality of operators.

FIG. 2C shows an example of an MOCN (Multi Operator Core Network). As shown in FIG. 2C, in the MOCN, a plurality of operators share a base station and a cell/frequency. Meanwhile, a service platform, an HSS/HLR, and CN PS are independent for each of the plurality of operators.

FIG. 2D shows an example of a GWCN (Gateway Core Network). As shown in FIG. 2D, in the GWCN, a plurality of operators share CN PS, a base station, and a cell/frequency. Meanwhile, a service platform and an HSS/HLR are independent for each of the plurality of operators.

In the MOCN/GWCN, the plurality of operators share the cell, and thus it is desirable to be able to change a configuration per operator (for example, per ID related to a public land mobile network (PLMN ID)).

For example, in an existing specification, whether to accept an initial access to a cell, a tracking area code, a specific cell ID in a PLMN, and the like are possible to be configured per PLMN ID.

Meanwhile, for a terminal (user terminal, User Equipment (UE)) in an RRC connected state, an operator-specific configuration is possible to be configured as an RRC configuration, depending on a PLMN ID of the terminal. Specifically, in resource sharing, in order for a part of a time resource of a shared cell to be available only for a terminal of a specific operator, terminals of the other operators are possible to be configured not to use the part of the time resource.

It is also studied to share an IAB node between a plurality of operators. In the present disclosure, an IAB node shared between a plurality of operators may be referred to as a shared IAB node or a common IAB node.

A scenario that such a shared IAB node is connected to a plurality of base stations (base stations corresponding to PLMN IDs) is conceivable.

In this case, it is assumed that at least one of a configuration for the IAB node and a report by the IAB node is required to be associated with a PLMN ID.

However, studies have not sufficiently been made on such association between a configuration/report and a PLMN ID in a case where a plurality of operators share an IAB node. Unless studies on this is sufficiently made, the communication operation may not be able to be performed flexibly for each of the operators, causing enhancement in the communication quality to be suppressed.

In view of this, the inventors of the present invention came up with the idea of a method of applying/configuring operation policies/parameters flexibly between operators in efficient station placing/frequency utilization with resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, ignoring, dropping, stopping, canceling, puncturing, rate matching, postponing, and the like may be interchangeably interpreted.

In the present disclosure, a specific ID, an ID related to a Public Land Mobile Network (PLMN), a PLMN ID, a PLMN identifier, a PLMN Identity, PLMN identifier information, PLMN Identity information, PLMN ID information, information identifying an operator, an ID identifying an operator, an ID per operator, a group ID, a PLMN group ID, and the like may be interchangeably interpreted.

In the present disclosure, a PLMN, an operator, an operator policy, a configuration per operator, and the like may be interchangeably interpreted.

In the present disclosure, a radio communication apparatus, an apparatus, an IAB, an IAB node, an IAB node MT, an IAB-MT, an IAB node DU, an IAB-DU, a terminal, a UE, a mobile station, and a base station may be interchangeably interpreted.

### (Radio Communication Method)

Hereinafter, in the present disclosure, although a specific ID is described taking a PLMN ID as an example, the name of the specific ID is not limited to this.

In the present disclosure, a specific parameter (RRC parameter) may be associated with a specific ID (for example, PLMN ID).

With respect to such association, the specific parameter may include a parameter related to the specific ID.

With respect to such association, another parameter included in the specific parameter may include the parameter related to the specific ID.

With respect to such association, a new parameter included in the specific parameter may be associated with the parameter related to the specific ID. The new parameter may include the parameter related to the specific ID.

In the present disclosure, in each RRC parameter, a denotement indicating a release in which the RRC parameter is defined may be added.

Such a denotement may be, for example, "-r18." An RRC parameter with the denotement may be the same parameter as the RRC parameter without the denotement. For example, prach-ConfigurationPeriodScaling-IAB may mean the same parameter as prach-ConfigurationPeriodScaling-IAB-r18. Note that "-r18" is only an example and may be replaced with any denotement (for example, "-r17"/"-r19" or the like), and that such denotement need not be added in an RRC parameter.

### <First Embodiment>

Separate (independent) configurations related to synchronization signal for respective specific IDs (for example, PLMN IDs) may be supported.

The configurations related to synchronization signal may each be, for example, at least one of a synchronization signal block (SSB) transmission configuration (STC) and an SSB-based measurement timing configuration (SMTC).

For a radio communication apparatus (for example, IAB node), an independent STC/SMTC may be configured per specific ID.

The STC may be configured by a specific parameter. For example, the specific parameter may be IAB STC information (for example, IAB STC-Info)/IAB STC information list (for example, IAB STC-Info List).

A parameter related to a specific ID (for example, PLMN ID) may be associated with the IAB STC information (IAB STC-Info)/IAB STC information list (IAB STC-Info List).

For example, the parameter related to the specific ID (for example, PLMN ID) may be included in the IAB STC information (IAB STC-Info)/IAB STC information list (IAB STC-Info List).

For example, the parameter related to the specific ID (for example, PLMN ID) may be associated with at least one of specific parameters in the IAB STC information (IAB STC-Info)/IAB STC information list (IAB STC-Info List).

The specific parameter may be, for example, at least one of a parameter (for example, SSB Frequency Info) related to SSB frequency information (SSB center frequency information), a parameter (for example, SSB Subcarrier Spacing) related to SSB subcarrier spacing, a parameter (for example, SSB Transmission Periodicity) related to SSB transmission periodicity, a parameter (for example, SSB Transmission Timing Offset) related to SSB transmission timing offset (SSB transmission timing offset represented by the number of half-frames), and a parameter (for example, SSB Transmission Bitmap) related to SSB transmission bitmap.

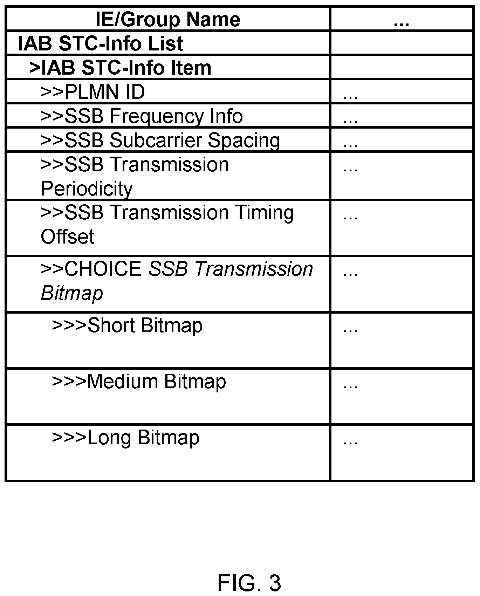

FIG. 3 is a diagram to show an example of a configuration of STC according to a first embodiment. In the example shown in FIG. 3, IAB STC information (IAB STC-Info) includes information (PLMN ID) related to a PLMN ID.

With an information element as shown in FIG. 3, an IAB node is possible to determine an STC configured per PLMN ID.

Note that, although FIG. 3 shows an example where IAB STC-Info includes a parameter indicating a PLMN ID, the PLMN ID may be associated with a specific parameter (at least one of specific parameters described above) included in IAB STC-Info.

The SMTC may be configured by a specific parameter. For example, the specific parameter may be SSB-MTC information.

The SSB-MTC information may be a parameter (for example, SSB-MTC3) of a measurement timing configuration for a synchronization signal corresponding to an IAB node MT (IAB MT). Such a parameter may be a parameter used for an IAB node to discover another IAB node/IAB donor DU.

A parameter related to a specific ID (for example, PLMN ID) may be associated with the SSB-MTC information (for example, SSB-MTC3) .

For example, the parameter related to the specific ID (for example, PLMN ID) may be included in the SSB-MTC information (for example, SSB-MTC3).

For example, the parameter related to the specific ID (for example, PLMN ID) may be associated with at least one of specific parameters in the SSB-MTC information (for example, SSB-MTC3).

The specific parameter may be at least one of a parameter (for example, duration) indicating a period of a measurement window to receive an SS/PBCH block, a parameter (for example, pci-List) indicating a list of physical cell IDs, a parameter (for example, periodicityAndOffset) indicating a periodicity and offset of a measurement window to receive an SS/PBCH block, and a parameter (for example, ssb-ToMeasure) indicating a set of SS blocks in an SMTC measurement period.

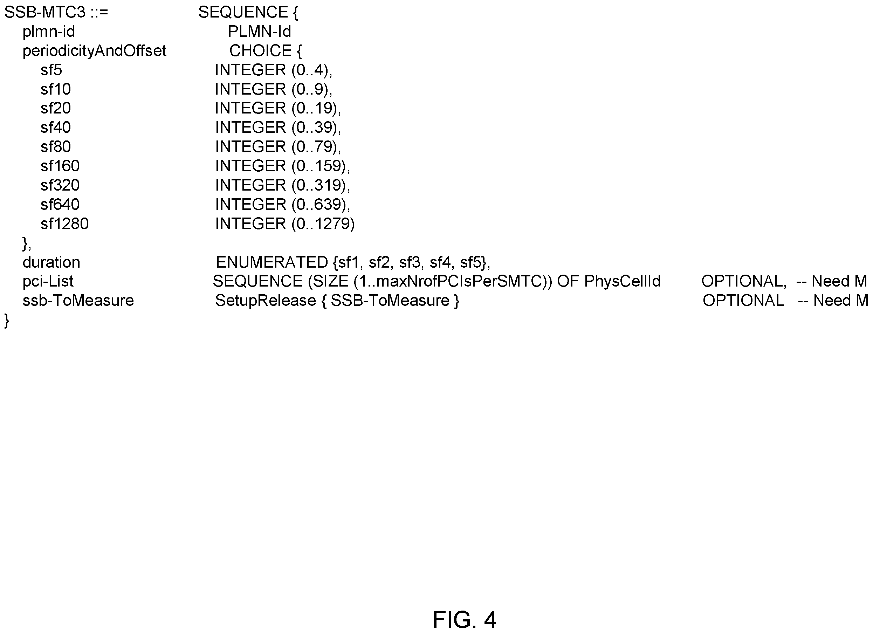

FIG. 4 is a diagram to show an example of a configuration of SMTC according to the first embodiment. In the example shown in FIG. 4, SSB-MTC information (SSB-MTC3) includes information (plmn-id) related to a PLMN ID.

With an information element as shown in FIG. 4, an IAB node is possible to determine an SMTC configured per PLMN ID.

Note that, although FIG. 4 shows an example where SSB-MTC3 includes a parameter indicating a PLMN ID, the PLMN ID may be associated with a specific parameter (at least one of specific parameters described above) included in SSB-MTC3.

A radio communication apparatus may report a measurement result based on an SMTC corresponding to a specific PLMN ID (SMTC configured for the specific PLMN ID), only to an apparatus (for example, parent node/base station) corresponding to the specific

### PLMN ID.

A radio communication apparatus may report a measurement result based on an SMTC corresponding to a specific PLMN ID (SMTC configured for the specific PLMN ID), to an apparatus (for example, parent node/base station) corresponding to the specific PLMN ID and to an apparatus corresponding to the specific PLMN ID.

A radio communication apparatus may report a measurement result based on an SMTC corresponding to a specific PLMN ID and report the specific PLMN ID.

A parameter related to a PLMN ID may be associated with a measurement result based on an SMTC (for example, MeasResult/MeasResultNR).

For example, the parameter related to the PLMN ID may be included in the measurement result based on the SMTC (for example, MeasResult/MeasResultNR).

For example, the parameter related to the PLMN ID may be associated with at least one of specific parameters included in the measurement result based on the SMTC (for example, MeasResult/MeasResultNR). For example, the parameter related to the PLMN ID may be included in at least one of specific parameters (information elements) included in the measurement result based on the SMTC (for example, MeasResult/MeasResultNR).

The first embodiment described above allows configuration of measurement and measurement to be appropriately performed, even when a radio communication apparatus (for example, IAB) is shared per operator.

### <Second Embodiment>

Separate (independent) configurations related to random access channel (RACH) for respective specific IDs (for example, PLMN IDs) may be supported.

The configurations related to RACH may each be, for example, a configuration of RACH for an IAB node.

For a radio communication apparatus (for example, IAB node), an independent configuration related to RACH may be notified/configured per specific ID.

The configuration related to RACH may be configured by a specific parameter. A specific ID (for example, PLMN ID) may be associated with the specific parameter.

For example, the specific parameter may be a parameter used for an IAB-MT (only).

For example, the specific parameter may be at least one of a parameter (for example, prach-ConfigurationPeriodScaling-IAB) indicating a scaling factor indicating a periodicity of a baseline configuration, a parameter (prach-ConfigurationSOffset-IAB) indicating a subframe/slot offset of a random access occasion (RO) defined in a baseline configuration, and a parameter (prach-ConfigurationFrameOffset-IAB) indicating a frame offset of an RO defined in a baseline configuration.

The specific parameter may be a parameter including at least one of a parameter indicating a scaling factor indicating a periodicity of a baseline configuration, a parameter indicating a subframe/slot offset of a random access occasion (RO) defined in a baseline configuration, and a parameter indicating a frame offset of an RO defined in a baseline configuration. The specific parameter may be, for example, at least one of a generic RACH configuration (RACH-ConfigGeneric) and a serving cell configuration (for example, ServingCellConfigCommonSIB).

The specific parameter may include a specific ID (PLMN ID) and the specific ID may be associated with at least one of a parameter indicating a scaling factor indicating a periodicity of a baseline configuration, a parameter indicating a subframe/slot offset of a random access occasion (RO) defined in a baseline configuration, and a parameter indicating a frame offset of an RO defined in a baseline configuration.

The second embodiment described above allows configuration of a random access channel to be appropriately performed, even when a radio communication apparatus (for example, IAB) is shared per operator.

### <Third Embodiment>

Separate (independent) configurations related to specific resource for respective specific IDs (for example, PLMN IDs) may be supported.

### <<Embodiment 3-1>>

The configurations related to specific resource may each be, for example, a configuration of a resource for an IAB node (MT).

The specific resource may be, for example, a soft resource. The soft resource may mean a resource that whether a certain resource is available for an IAB DU or IAB MT is dynamically switchable.

DCI (for example, DCI format 2_5) notifying/indicating availability of the specific resource may be configured/indicated separately (independently) per specific ID (for example, PLMN ID).

In a search space (for example, an RRC parameter related to the search space), a specific ID (a DCI format related to the specific ID) may be configured. In the search space, a UE may monitor DCI (for example, DCI format 2_5) related to the specific ID (PLMN ID).

With such a method, in a situation where there are a plurality of parent nodes, a certain parent node is possible to be configured to monitor DCI (for example, DCI format 2_5) and another parent node is possible to be configured not to monitor DCI (for example, DCI format 2_5).

An RRC parameter that configures information included in DCI (for example, DCI format 2_5) notifying/indicating availability of the specific resource may be associated with a specific ID (for example, PLMN ID).

The RRC parameter may be, for example, at least one of a parameter (AvailabilityCombinationsPerCell) that configures combinations (Availability Combinations) of availabilities to be applied for a cell of an IAB DU and a parameter (AvailabilityIndicator) that configures monitoring of a PDCCH for availability indicators (AIs).

The RRC parameter may include a specific ID (for example, PLMN ID) .

The specific ID (for example, PLMN ID) may be associated with at least one of specific parameters included in the RRC parameter.

The specific parameter may be, for example, at least one of a parameter (availabilityCombinationsPerCellIndex) indicating an index of a parameter that configures Availability Combinations per cell, a parameter (iab-DU-CellIdentity) indicating an ID of an IAB DU cell applied with Availability Combinations, a parameter (positionInDCI-AI), in a DCI payload, indicating a (start) position (bit) of AvailabilityCombinationId of an indicated IAB DU cell, a parameter (AvailabilityCombination) indicating Availability Combinations, a parameter (availabilityCombinationId) indicating an ID of Availability Combinations, and a parameter (resourceAvailability) indicating Availability of a resource.

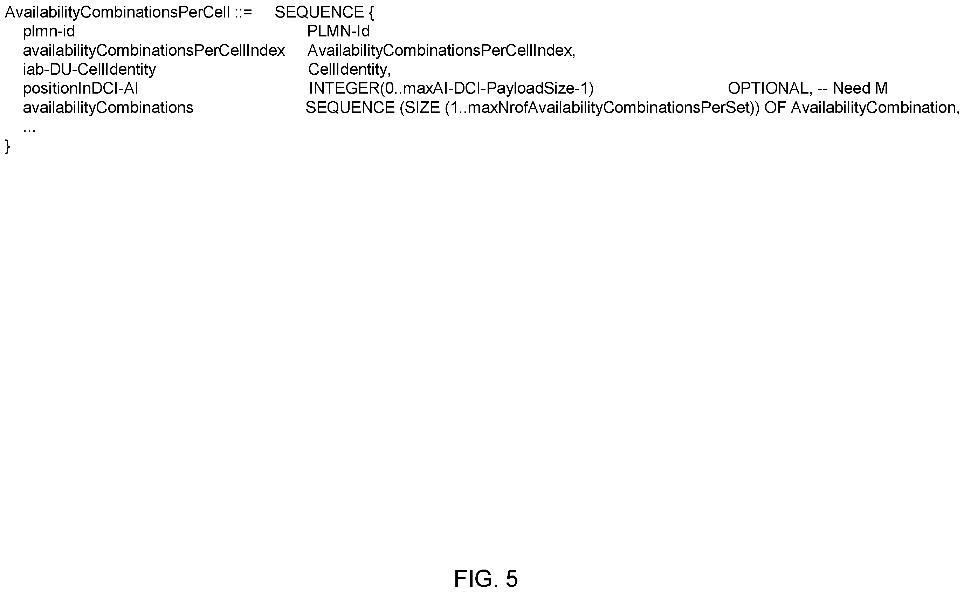

FIG. 5 is a diagram to show an example of a configuration of Availability Combinations according to Embodiment 3-1. In the example shown in FIG. 5, AvailabilityCombinationsPerCell includes information (plmn-id) related to a PLMN ID.

With an information element as shown in FIG. 5, an IAB node is possible to determine an available resource configured per PLMN ID.

Note that, although FIG. 5 shows an example where AvailabilityCombinationsPerCell includes a parameter indicating a PLMN ID, the PLMN ID may be associated with a specific parameter (at least one of specific parameters described above) included in AvailabilityCombinationsPerCell.

### <<Embodiment 3-2>>

The configurations related to specific resource may each be, for example, a configuration of a resource for an IAB node (MT).

The specific resource may be, for example, a TDD configuration. The TDD configuration may be, for example, a TDD configuration for an IAB node (MT) (for example, TDD-UL-DL-ConfigDedicated-IAB-MT/TDD-UL-DL-ConfigDedicated-IAB-MT-r16).

A specific ID (PLMN ID) may be associated with the TDD configuration.

The specific ID (PLMN ID) may be included in the TDD configuration. The specific ID (PLMN ID) may be associated with at least one of specific parameters included in the TDD configuration.

In a case where, regarding a certain resource, DL/UL is configured for a first PLMN ID and FL (flexible) is configured for a second PLMN ID, the certain resource may be determined as a resource to be used (precedentially) by the first PLMN ID.

A resource configured with the same direction (for example, DL or UL) associated with a plurality of different PLMN IDs may be a resource (which may be referred to as a shared resource) that is shared between a plurality of PLMNs.

A radio communication apparatus (for example, IAB MT) need not assume that, for a resource (time resource) configured/indicated with DL (or UL) for a certain PLMN ID, UL (or DL) for a different PLMN ID is configured/indicated.

In the following, the shared resource will be described.

A radio communication apparatus (for example, IAB node) may receive information related to a PLMN ID associated with a shared resource.

Such information may be information indicating whether a radio communication apparatus corresponding to a specific PLMN ID is possible to use a shared resource. The information may be information notifying/indicating a TDD configuration (slot format) for the specific PLMN ID. The information may be information notifying/indicating a PLMN ID associated with the shared resource.

The information may be transmitted using an existing DCI format (for example, DCI format 2_1), for example. An RNTI (Radio Network Temporary Identifier) for the DCI and a search space/CORESET corresponding to the DCI may be associated with the PLMN ID.

The information may be, for example, a new DCI format (defined in Rel. 18 or later versions).

An operation of an IAB node in a case that transmission/reception for a PLMN ID different from a PLMN ID associated with a shared resource (at least one of a symbol the same as that for the shared resource and one in a slot the same as that for the shared resource) is indicated/configured in the shared resource may be defined.

For example, an IAB node need not assume/expect that transmission/reception for a PLMN ID different from a PLMN ID associated with a shared resource (at least one of a symbol the same as that for the shared resource and one in a slot the same as that for the shared resource) is configured/indicated in the shared resource (Operation Example 1).

For example, in a case where transmission/reception for a PLMN ID different from a PLMN ID associated with a shared resource (at least one of a symbol the same as that for the shared resource and one in a slot the same as that for the shared resource) is configured/indicated in the shared resource, an IAB node may ignore the configuration/indication (Operation Example 2).

For example, in a case where transmission/reception for a PLMN ID different from a PLMN ID associated with a shared resource (at least one of a symbol the same as that for the shared resource and one in a slot the same as that for the shared resource) is configured/indicated in the shared resource, an IAB node may change/update/determine, based on the configuration/indication, the PLMN ID associated with the shared resource (Operation Example 3) .

Note that, based on whether the configured/indicated resource is a symbol the same as that for the shared resource or on whether the configured/indicated resource is a resource in a slot the same as that for the shared resource, whether to apply at least one of the IAB node operation examples may vary. For example, in a case where the configured/indicated resource is a symbol the same as that for the shared resource, Operation Example 1 (or Operation Example 2/3) may be applied. In a case where the configured/indicated resource is a resource in a slot the same as that for the shared resource, Operation Example 2 (or Operation Example 1/3) may be applied.

Capability information indicating whether a PLMN ID associated with a certain resource is possible to be changed/updated may be defined. The capability information may be defined as an IAB node capability. The capability information may be a capability common to a use for an IAB node and a use for a UE or may be separate capabilities.

The third embodiment described above allows configuration of a resource to be appropriately performed, even when a radio communication apparatus (for example, IAB) is shared per operator.

### <Supplements>

In the embodiments of the present disclosure, the number of RRC parameters (information elements) configurable may be extended as compared with that in Rel. 15/16/17.

In the embodiments of the present disclosure, the maximum number of RRC parameters (information elements) configurable may be defined.

### <Variations>

A configuration/parameter per specific ID (for example, PLMN ID), described in the embodiments above, is only an example. Besides the configuration/parameter described in the embodiments above, any configuration/parameter may be configured/notified per specific ID (for example, PLMN ID).

A specific ID (for example, PLMN ID) and a configuration associated with the specific ID may have a one-to-one correspondence. In other words, one configuration may be associated with one specific ID.

A specific ID (for example, PLMN ID) and a configuration associated with the specific ID may have a plurality (more than one)-to-one correspondence. In other words, one configuration may be associated with a plurality of (more than one) specific IDs (for example, a list of the specific IDs).

In the embodiments of the present disclosure, a cell for network sharing to be performed may be a specific cell. For example, a cell for network sharing to be performed may be an SCell, and a configuration may be used where no PCell (SpCell) has network sharing performed. Alternatively, a cell for network sharing to be performed may be a PCell (SpCell), and a configuration may be used where no SCell has network sharing performed.

### (Supplementary Note)

Regarding one embodiment of the present disclosure, the following supplementary notes of the invention will be given.

### {Supplementary Note 1}

A radio communication apparatus including: a receiving section that receives specific configuration information associated with a Public Land Mobile Network (PLMN) ID; and a control section that controls, based on the configuration information, at least one of measurement associated with the PLMN ID, random access associated with the PLMN ID, and determination of a resource associated with the PLMN ID.

### {Supplementary Note 2}

The radio communication apparatus according to supplementary note 1, wherein the configuration information is at least one of a transmission configuration of a synchronization signal block and a measurement timing configuration based on the synchronization signal block, and the measurement is measurement of the synchronization signal block.

### {Supplementary Note 3}

The radio communication apparatus according to supplementary note 1 or 2, wherein the configuration information is a configuration of a physical random access channel (PRACH) for an Integrated Access Backhaul (IAB).

### {Supplementary Note 4}

The radio communication apparatus according to any one of supplementary notes 1 to 3, wherein the configuration information is a configuration of Time Division Duplex (TDD) for an Integrated Access Backhaul (IAB)-Mobile Termination (MT), and the control section determines, based on the configuration of TDD, a communication direction of the resource.

### {Supplementary Note 5}

The radio communication apparatus according to any one of supplementary notes 1 to 4, wherein a plurality of PLMN IDs are associated in a certain time domain of the resource.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

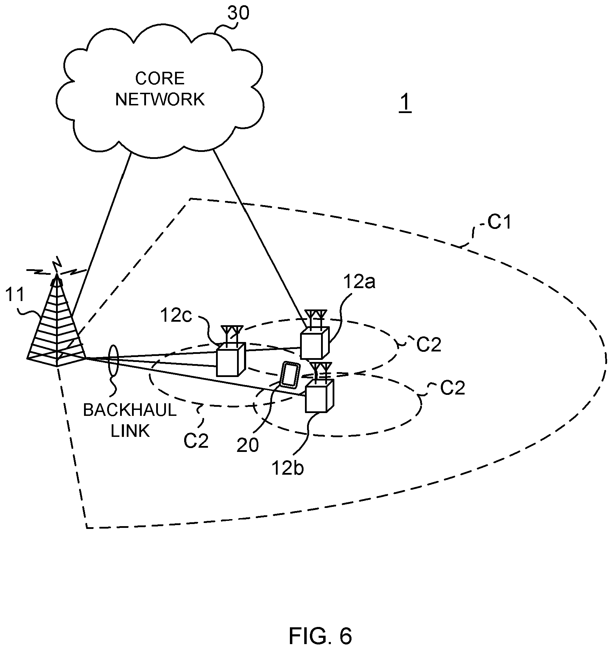

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in UL and DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, or the like may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI that schedules the PDSCH may be referred to as "DL assignment," "DL DCI," or the like, and DCI that schedules the PUSCH may be referred to as "UL grant," "UL DCI," or the like. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, a random access preamble for establishment of a connection with a cell may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for the PBCH) may be referred to as an SS/PBCH block, an SS Block (SSB), or the like. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

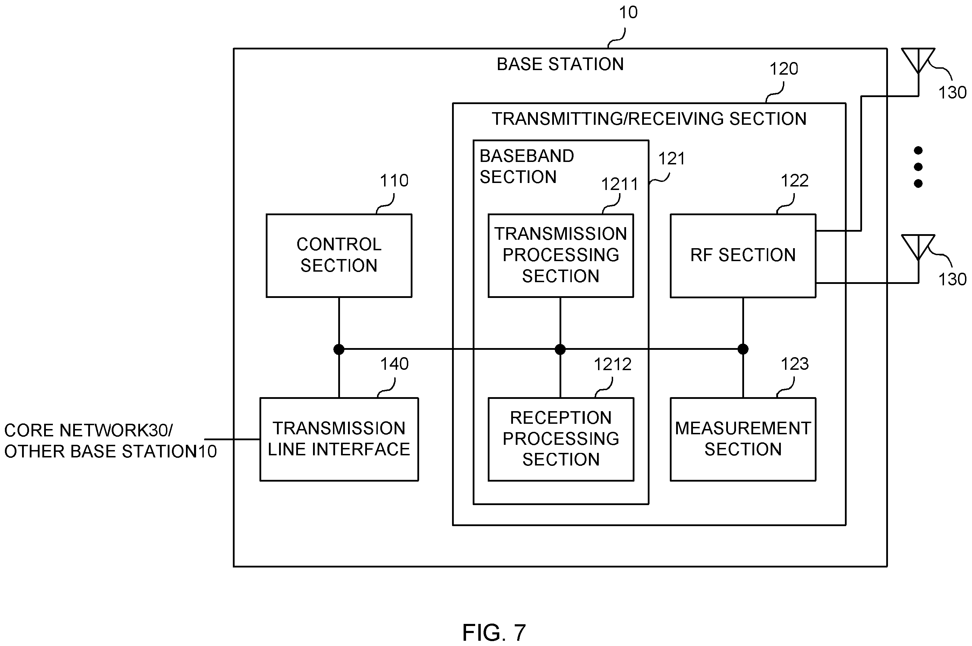

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may include the transmission processing section 1211 and the RF section 122. The receiving section may include the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, or the like, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, or the like, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive specific configuration information associated with a Public Land Mobile Network (PLMN) ID. The control section 110 may control, based on the configuration information, at least one of measurement associated with the PLMN ID, random access associated with the PLMN ID, and determination of a resource associated with the PLMN ID (first to third embodiments).

The configuration information may be at least one of a transmission configuration of a synchronization signal block and a measurement timing configuration based on the synchronization signal block. The measurement may be measurement of the synchronization signal block (first embodiment).

The configuration information may be a configuration of a physical random access channel (PRACH) for an Integrated Access Backhaul (IAB) (second embodiment).

The configuration information may be a configuration of Time Division Duplex (TDD) for an Integrated Access Backhaul (IAB)-Mobile Termination (MT). The control section 110 may determine, based on the configuration of TDD, a communication direction of the resource (third embodiment).

A plurality of PLMN IDs may be associated in a certain time domain of the resource (third embodiment).

### (User Terminal)

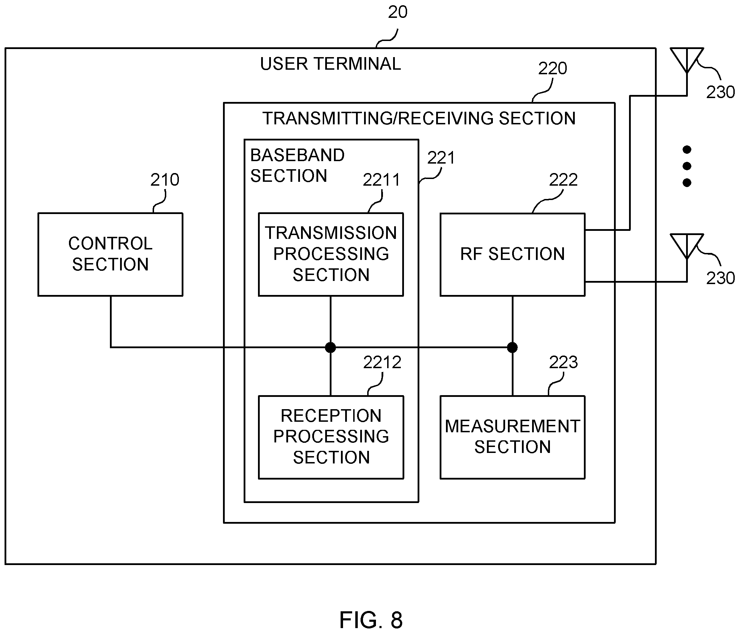

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 may include a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may include the transmission processing section 2211 and the RF section 222. The receiving section may include the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), or the like, for example, on data, control information, or the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, or the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, or the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, or the like, based on the received signal. The measurement section 223 may measure a received power (for example, RSRP), a received quality (for example, RSRQ, SINR, SNR), a signal strength (for example, RSSI), channel information (for example, CSI), or the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive specific configuration information associated with a Public Land Mobile Network (PLMN) ID. The control section 210 may control, based on the configuration information, at least one of measurement associated with the PLMN ID, random access associated with the PLMN ID, and determination of a resource associated with the PLMN ID (first to third embodiments).

The configuration information may be at least one of a transmission configuration of a synchronization signal block and a measurement timing configuration based on the synchronization signal block. The measurement may be measurement of the synchronization signal block (first embodiment).

The configuration information may be a configuration of a physical random access channel (PRACH) for an Integrated Access Backhaul (IAB) (second embodiment).

The configuration information may be a configuration of Time Division Duplex (TDD) for an Integrated Access Backhaul (IAB)-Mobile Termination (MT). The control section 210 may determine, based on the configuration of TDD, a communication direction of the resource (third embodiment).

A plurality of PLMN IDs may be associated in a certain time domain of the resource (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

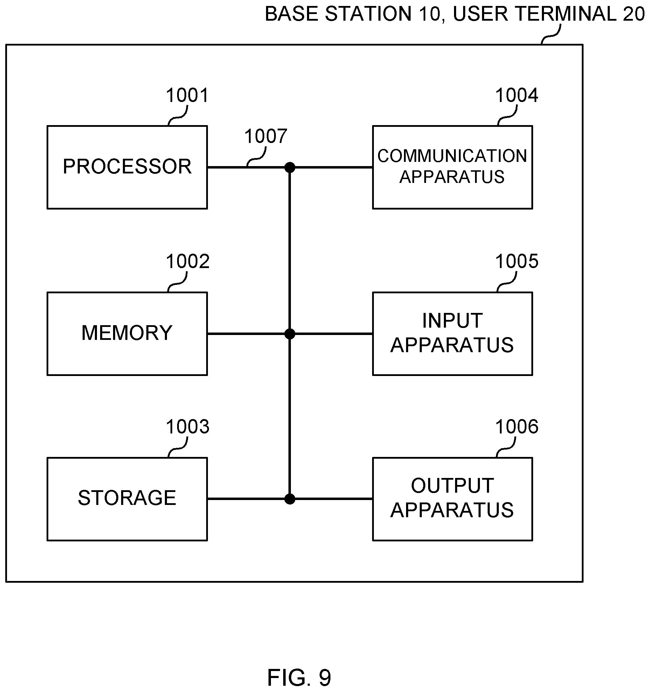

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," or the like instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and the like. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

A BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside the active BWPs. Note that a "cell," a "carrier," or the like in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (such as PUCCH and PDCCH) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, or the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs) .

Also, notification of certain information (for example, notification of "being X") does not necessarily have to be notified explicitly, and may be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

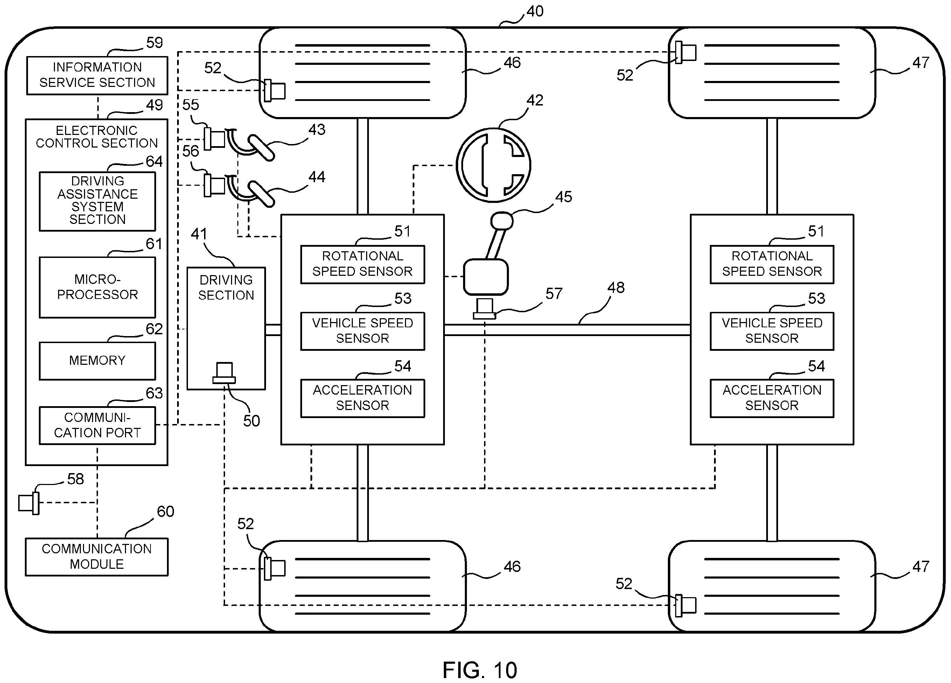

FIG. 10 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A radio communication apparatus comprising:
a receiving section that receives specific configuration information associated with a Public Land Mobile Network (PLMN) ID; and
a control section that controls, based on the configuration information, at least one of measurement associated with the PLMN ID, random access associated with the PLMN ID, and determination of a resource associated with the PLMN ID.

2. The radio communication apparatus according to claim 1, wherein
the configuration information is at least one of a transmission configuration of a synchronization signal block and a measurement timing configuration based on the synchronization signal block, and
the measurement is measurement of the synchronization signal block.

3. The radio communication apparatus according to claim 1, wherein
the configuration information is a configuration of a physical random access channel (PRACH) for an Integrated Access Backhaul (IAB).

4. The radio communication apparatus according to claim 1, wherein
the configuration information is a configuration of Time Division Duplex (TDD) for an Integrated Access Backhaul (IAB)-Mobile Termination (MT), and
the control section determines, based on the configuration of TDD, a communication direction of the resource.

5. The radio communication apparatus according to claim 1, wherein
a plurality of PLMN IDs are associated in a certain time domain of the resource.

6. A radio communication method for a radio communication apparatus, the radio communication method comprising:
receiving specific configuration information associated with a Public Land Mobile Network (PLMN) ID; and
controlling, based on the configuration information, at least one of measurement associated with the PLMN ID, random access associated with the PLMN ID, and determination of a resource associated with the PLMN ID.
